# EUROPÄISCHE PATENTSCHRIFT

(11) **EP 4 311 421 B1**
(45) Veröffentlichungstag und Bekanntmachung des Hinweises auf die Patenterteilung: **17.12.2025**
(21) Anmeldenummer: 23170561.7
(22) Anmeldetag: 28.04.2023
(51) Int. Cl.: A01D 41/12, A01D 67/00, F01N 3/20, B60K 13/04, B60K 15/03, B60K 15/063, B60K 15/073, B60R 3/00

(54) **LANDWIRTSCHAFTLICHE ERNTEMASCHINE**
AGRICULTURAL HARVESTER
RÉCOLTEUSE AGRICOLE

(30) Priorität: 28.07.2022 DE 102022118943
(43) Veröffentlichungstag der Anmeldung: 31.01.2024
(73) Patentinhaber: CLAAS Selbstfahrende Erntemaschinen GmbH, 33428 Harsewinkel (DE)
(72) Erfinder: Pape, Nils, 31832 Springe (DE); Flöthmann, Sebastian, 33334 Gütersloh (DE); Thies, Sören, 33442 Herzebrock-Clarholz (DE); Zimny, André, 48167 Münster (DE)
(74) Vertreter: CLAAS Gruppe

(56) Entgegenhaltungen:
- EP-B1- 2 172 366
- EP-B2- 1 518 453
- CN-A- 110 549 844
- CN-U- 206 264 786
- CN-U- 216 101 520
- IT-A1- 201800 006 113
- BENSING TOBIAS ET AL: "Feldh�cksler-Baureihe 9000 von John Deere: Zweite Stufe z�ndet", PROFI - MAGAZIN F�R PROFESSIONELLE AGRARTECHNIK - SONDERDRUCK 11/2018, 1 November 2018 (2018-11-01), XP93201745, Retrieved from the Internet <URL:www.profi.de>

## Beschreibung

Die vorliegende Anmeldung betrifft eine landwirtschaftliche Erntemaschine, insbesondere einen Feldhäcksler, mit einem Tankbehältnis und einer Fahrerkabine, die über einen Aufstieg zugänglich ist, gemäß dem Oberbegriff des unabhängigen Patentanspruchs 1.

Bei landwirtschaftlichen, insbesondere selbstfahrenden, Erntemaschinen, wie einem Feldhäcksler, handelt es sich um technisch komplexe und damit in der Anschaffung teure Investitionsgüter. Da die Erntemaschinen jeweils nur in verhältnismäßig kurzen Erntesaisons eingesetzt werden können, nämlich wenn die zu erntenden Feldfrüchte reif sind und auch weitere Erntebedingungen, wie insbesondere Wettervoraussetzungen, erfüllt sind, werden die Erntemaschinen innerhalb dieser kurzen Zeit hoch ausgelastet, um wirtschaftlich zu arbeiten.

Die hohe Auslastung der landwirtschaftlichen Erntemaschinen in der Erntesaison erfordert es, dass die landwirtschaftlichen Erntemaschinen über Stunden hinweg ohne nennenswerte Unterbrechungen betrieben werden müssen. Hierzu ist es erforderlich eine hohe Menge an Betriebsflüssigkeiten, wie Kraftstoff, Harnstofflösung, Siliermittel, Kühlflüssigkeit oder dergleichen, unmittelbar auf der landwirtschaftlichen Erntemaschine in einem oder mehreren Tankbehältnissen mitzuführen.

Solche Tankbehältnisse müssen Volumina von über 1000 Litern fassen können, damit ein langer und unterbrechungsfreier Betrieb während der Erntesaison möglich ist. Eine Anordnung des bzw. der Tankbehältnisse unmittelbar neben einer Fahrerkabine ist nicht möglich, da hierdurch das Sichtfeld des Bedieners der landwirtschaftlichen Erntemaschine unnötig eingeschränkt würde und somit eine effiziente und sichere Bedienung der landwirtschaftlichen Erntemaschine nicht mehr sichergestellt wäre. Daher müssen der bzw. die Tankbehältnisse an anderen Stellen der landwirtschaftlichen Erntemaschine angebracht werden, was jedoch die Zugänglichkeit zu einzelnen Komponenten und Arbeitsaggregaten der landwirtschaftlichen Erntemaschine und den für die Anordnung der Komponenten und Arbeitsaggregate zur Verfügung stehenden Bauraum einschränkt.

Die EP 1 518 453 A1 schlägt in diesem Zusammenhang eine landwirtschaftliche Erntemaschine vor, die eine Speichervorrichtung umfasst, welche von einem in die Karosserie der landwirtschaftlichen Erntemaschine integrierten Behältnis gebildet wird.

Ein solches Tankbehältnis zeichnet sich durch eine bauraumsparende Anordnung aus, so dass der vorhandene bzw. vorgesehene Bauraum an der landwirtschaftlichen Erntemaschine für die Anordnung von anderen Komponenten und Arbeitsaggregaten der landwirtschaftlichen Erntemaschine genutzt werden kann.

Aufgrund der großen Maschinenbauhöhe sowie aus Gründen der besseren Übersicht über den bis zu mehrere Meter hohen Erntebestand sind Fahrerkabinen landwirtschaftlicher Erntemaschinen relativ hoch an der Erntemaschine angeordnet und über einen Aufstieg zugänglich, über den der Bediener vom Boden bzw. der Bodenfläche aus in die bis zu mehrere Meter hoch befindliche Fahrerkabine hinaufsteigen kann.

Eine Anordnung, wie sie aus der EP 1 518 453 A1 bekannt ist, schafft im Hinblick auf eine Zugänglichkeit der Fahrerkabinen allerdings Herausforderungen, insbesondere im Hinblick auf eine Anordnung und Ausgestaltung eines Aufstiegs zur Fahrerkabine der landwirtschaftlichen Erntemaschine.

So muss eine Aufstiegstreppe eines Aufstiegs zur Fahrerkabine, zumindest jedoch ein Treppenabschnitt der Aufstiegstreppe, irgendwie an das Tankbehältnis angebunden werden. Weiterhin müssen unter Umständen Zwischenebenen geschaffen werden, um dem Bediener der landwirtschaftlichen Erntemaschine überhaupt in Richtung der Fahrerkabine führen zu können, was einem komfortablen Aufstieg durch den Bediener entgegenstehen kann. Ferner unterliegt die Ausgestaltung und Anordnung der Aufstiegstreppe der Maßgabe, dass bestehende Restriktionen im Hinblick auf die maximalen Außenmaße der landwirtschaftlichen Erntemaschine eingehalten werden müssen, was zu einer weiteren Komplexität bei der Ausgestaltung und Anordnung führt. Eine Aufstiegstreppe zu einer Fahrerkabine mit einem in einen Treppenabschnitt integrierten Tankbehältnis ist aus XP 093201745 bekannt geworden.

Ausgehend hiervon ist es demnach die Aufgabe der vorliegenden Erfindung eine landwirtschaftliche Erntemaschine mit einem Aufstieg anzugeben, der sich durch eine bauraumsparende aber einfache Anordnung bzw. Ausgestaltung auszeichnet und gleichzeitig einen für einen Bediener der landwirtschaftlichen Erntemaschine komfortablen Zugang zur Fahrerkabine ermöglicht.

Diese Aufgabe wird erfindungsgemäß durch die Merkmale des unabhängigen Patentanspruchs 1 gelöst, wobei vorteilhafte Weiterbildungen der erfindungsgemäßen landwirtschaftlichen Erntemaschine Gegenstand der entsprechenden abhängigen Patentansprüche 2 bis 13 sind.

Demnach betrifft die vorliegende Erfindung eine landwirtschaftliche Erntemaschine, insbesondere einen Feldhäcksler, mit einem Tankbehältnis und einer Fahrerkabine, die über einen Aufstieg zugänglich ist. Der Aufstieg umfasst zumindest eine Aufstiegstreppe, die wiederum einen ersten, unteren, Treppenabschnitt und einen zweiten, oberen, Treppenabschnitt, der an den ersten, unteren, Treppenabschnitt angrenzt, umfasst. Der erste, untere, Treppenabschnitt und der zweite, obere, Treppenabschnitt umfassen jeweils Treppenstufen. Das Tankbehältnis ist bereichsweise zwischen einem Bodeneingriffsmittel einer Vorderachse und einem Bodeneingriffsmittel einer Hinterachse der landwirtschaftlichen Erntemaschine angeordnet. Das Tankbehältnis bildet den ersten, unteren, Treppenabschnitt aus, wobei die Treppenstufen des ersten, unteren, Treppenabschnitts schraubenlinienartig entlang einer vertikal verlaufenden Achse angeordnet sind.

Vertikal verlaufend ist hierbei so zu verstehen, dass sich die Achse, entlang der die Treppenstufen schraubenlinienartig angeordnet sind, in Vertikalrichtung der landwirtschaftlichen Erntemaschine, also in Maschinenvertikal- bzw. Maschinenhöhenrichtung, erstreckt.

Durch die Ausgestaltung des Aufstiegs, bei dem der erste, untere, Treppenabschnitt durch das Tankbehältnis ausgebildet ist und dessen Treppenstufen schraubenlinienartig angeordnet sind, wird eine besonders bauraumsparende Ausgestaltung bzw. Anordnung der Aufstiegstreppe erzielt, die den Bediener besonders komfortabel zur Fahrerkabine führt. Die schraubenlinienartige Anordnung sorgt dafür, dass eine nicht unerhebliche Distanz in Maschinenvertikal- bzw. Maschinenhöhenrichtung, also eine Höhendifferenz zwischen Boden bzw. Bodenfläche und Fahrerkabinenhöhe, von dem Bediener der landwirtschaftlichen Erntemaschine abgeschritten werden kann, wobei nur eine minimale Distanz in Maschinenquerrichtung zurückgelegt werden muss. Gleichzeitig wird der Bediener der landwirtschaftlichen Erntemaschine bei einem Abschreiten des ersten, unteren, Treppenabschnitts automatisch in Richtung der Fahrerkabine geführt. Vereinfacht gesprochen ist der erste, untere, Treppenabschnitt in Gestalt eines bauraumsparenden Wendeltreppenabschnittes ausgebildet.

Weiterhin sorgt die Ausgestaltung dafür, dass sich der erste, untere, Treppenabschnitt in die bestehende Struktur der landwirtschaftlichen Erntemaschine einfügt, ohne hierbei die Zugänglichkeit zu wichtigen Komponenten und Arbeitsaggregaten der landwirtschaftlichen Erntemaschine zu beeinträchtigen. Konflikte mit bestehende Restriktionen hinsichtlich der maximalen Außenmaße der landwirtschaftlichen Erntemaschine werden hierdurch ebenfalls vermieden, da der Aufstieg nicht außenseitig an die landwirtschaftliche Erntemaschine angesetzt und dort befestigt werden muss. Vielmehr liegt der Aufstieg zur Fahrerkabine innerhalb der Silhouette der landwirtschaftlichen Erntemaschine.

Gemäß einer vorteilhaften Weiterbildung der Erfindung ist vorgesehen, dass eine Ausrichtung einer ersten, untersten, Treppenstufe des ersten, unteren, Treppenabschnitts von einer Ausrichtung einer letzten, obersten, Treppenstufe des ersten, unteren, Treppenabschnitts um einen Winkel zwischen 45° und 90° verschieden ist.

Vorzugsweise ist vorgesehen, dass eine Ausrichtung der ersten, untersten, Treppenstufe des ersten, unteren, Treppenabschnitts von einer Ausrichtung der letzten, obersten, Treppenstufe des ersten, unteren, Treppenabschnitts um einen Winkel zwischen 60° und 90° verschieden ist.

Mittels des ersten, unteren, Treppenabschnitts, der schraubenlinienartig angeordnete Treppenstufen umfasst, die einen Winkelbereich von 45° bis 90° abdecken, bewegt sich der Bediener aus einer Position mit einer ersten Blickrichtung, die im Normalfall im Wesentlichen mit einer Maschinenquerrichtung fluchtet, in eine Position mit einer zweiten Blickrichtung, die in Richtung der Fahrerkabine orientiert ist, vorzugsweise im Wesentlichen mit einer Maschinenlängsrichtung fluchtet, so dass ein Zugang zur Fahrerkabine bei Erreichen derselben besonders komfortabel möglich ist.

Das Tankbehältnis umfasst einen gestuften Oberflächenbereich, der den ersten, unteren, Treppenabschnitt ausbildet. Jeder Treppenstufe des ersten, unteren, Treppenabschnitts ist ein durch den gestuften Oberflächenbereich des Tankbehältnisses ausgebildetes Stufenplateau zugeordnet.

Insbesondere ist vorgesehen, dass jeweils eine Treppenstufe des ersten, unteren, Treppenabschnitts oberhalb jeweils eines Stufenplateaus angeordnet ist.

Durch die gestufte Ausgestaltung des Oberflächenbereichs wird der Verlauf des ersten, unteren, Treppenabschnitts definiert. Durch ein jeweiliges Stufenplateau, das durch den gestuften Oberflächenverlauf gebildet wird, wird im Wesentlichen die Lage der Treppenstufen definiert, die oberhalb eines jeweiligen Stufenplateaus angeordnet ist. Der Oberflächenbereich ist dabei bereits derart orientiert, dass die Stufenplateaus ebenfalls schraubenlinienartig entlang der vertikal verlaufenden Achse ausgerichtet sind, wodurch die schraubenlinienartige Orientierung der Treppenstufen wiederum vordefiniert wird.

Erfindungsgemäß ist vorgesehen, dass jedes Stufenplateau eine erste Plateaufläche umfasst, die derart geformt ist, dass Verunreinigungen, die auf die erste Plateaufläche fallen, von der ersten Plateaufläche abgeführt werden.

Insbesondere ist vorgesehen, dass die erste Plateaufläche konkav und ein Gefälle entgegen einer Aufstiegsrichtung aufweisend ausgebildet ist.

Durch eine erste Plateaufläche mit einer funktionalen Formgebung wird ein Automatismus für die Abfuhr von Verunreinigungen, die sich bei einem Besteigen der Aufstiegstreppe vom Schuh eines Bedieners lösen und/oder während des Erntebetriebs entstehen, geschaffen. Weiterhin wird auch eine Abfuhr von Flüssigkeiten, beispielsweise von Regenwasser oder Wasser eines Reinigungsvorgangs der landwirtschaftlichen Erntemaschine, das mit Verunreinigungen versetzt seien kann, durch diese funktionale Formgebung realisiert bzw. begünstigt. Die Verunreinigungen und/oder Flüssigkeiten können von jeder ersten Plateaufläche eines Stufenplateaus abgeführt werden, insbesondere abgleiten oder abfließen, und somit stufenweise in Richtung des Bodens bzw. der Bodenfläche geführt werden. Auf aufwendige Reinigungsvorrichtungen an der Aufstiegstreppe kann somit verzichtet werden.

Gemäß einer vorteilhaften Weiterbildung der Erfindung ist vorgesehen, dass jedes Stufenplateau zumindest eine zweite Plateaufläche umfasst, die einer Befestigung einer Treppenstufe des ersten, unteren, Treppenabschnitts an dem Tankbehältnis dient.

Vorzugsweise ist vorgesehen, dass jedes Stufenplateau zwei zweite Plateauflächen umfasst, die einander durch die erste Plateaufläche beabstandet gegenüberliegend angeordnet sind.

Gemäß einer vorteilhaften Weiterbildung der Erfindung ist vorgesehen, dass die zumindest eine zweite Plateaufläche zumindest eine mit einem Gewinde versehene Ausnehmung umfasst, die der Befestigung der Treppenstufe des ersten, unteren, Treppenabschnitts mittels eines Befestigungsmittels an dem Tankbehältnis dient.

Die Schaffung von einer oder mehreren, insbesondere zwei, zweiten Plateauflächen erlaubt eine besonders unkomplizierte Anbindung der Treppenstufen an das Tankbehältnis, ohne dabei die Funktion der Abfuhr von Verunreinigungen und/oder Flüssigkeiten negativ zu beeinflussen. Die jeweilige Treppenstufe des ersten, unteren, Treppenabschnitts kann mittels eines Befestigungsmittels, vorzugsweise einer Schraube, die in die mit einem Gewinde versehenen Ausnehmung eingesetzt wird, kraft- und/oder formschlüssig befestigt bzw. fixiert werden, so dass eine stabile Anbindung der Treppenstufe realisiert wird.

Gemäß einer vorteilhaften Weiterbildung der Erfindung ist vorgesehen, dass jedes Stufenplateau seitlich in Bezug auf eine Aufstiegsrichtung durch Wandungen begrenzt ist. Die Wandungen sind durch das Tankbehältnis ausgebildet.

Hierdurch wird einer Gefahr eines seitlichen Abrutschens des Bedieners von dem ersten, unteren, Treppenabschnitts bzw. den Treppenstufen des ersten, unteren, Treppenabschnitts und somit einem potenziellen erheblichen Verletzungsrisiko entgegengewirkt. Durch die seitlichen Wandungen wird eine seitliche Begrenzung im Bereich der Treppenstufen geschaffen. Insbesondere dann, wenn Witterungsbedingungen vorliegen, die zu einem glatten Zustand der Treppenstufen führen, oder dann, wenn der Schuh des Bedieners mit Flüssigkeiten benetzt ist, und die Gefahr besteht, dass der Bediener beim Besteigen des ersten, unteren, Treppenabschnitts von einer Treppenstufe abrutschen könnte, sorgt die durch die Wandungen ausgebildete seitliche Begrenzung dafür, dass der Bediener seitlich nicht abrutschen und von der Aufstiegstreppe fallen kann.

Gemäß einer vorteilhaften Weiterbildung der Erfindung ist vorgesehen, dass das Tankbehältnis ein Kunststoffrotationsgussbauteil ist.

Vorzugsweise ist vorgesehen, dass die mit einem Gewinde versehene Ausnehmung der zumindest einen zweiten Plateaufläche mittels eines Gewindeeinsatzes ausgebildet ist, der in das Tankbehältnis eingegossen ist.

Hierdurch wird eine besonders kostengünstige Fertigung des Tankbehältnisses ermöglicht. Durch ein Eingießen von einem oder mehreren Gewindeeinsätzen in den Tankbehälter können komplexe Gießformen und/oder eine nachträgliche spanende Bearbeitung während der Fertigung des Tankbehältnisses vermieden werden, wodurch Herstellkosten reduziert werden, was zu einer Steigerung der Wirtschaftlichkeit führt.

Gemäß einer vorteilhaften Weiterbildung der Erfindung ist vorgesehen, dass die Treppenstufen des ersten, unteren, Treppenabschnitts und/oder des zweiten, oberen, Treppenabschnitts durch gitterartige Trittstufen ausgebildet sind.

Die Nutzung von gitterartig ausgebildeten Trittstufen als Treppenstufen sorgt dafür, dass diese stets eine gewisse "Griffigkeit" aufweisen und keine Flächen ausgebildet werden, die unter gewissen Bedingungen zu Gleitflächen werden können. Insbesondere dann, wenn Witterungsbedingungen vorliegen, die dazu führen, dass die Treppenstufen feucht oder nass sind oder mit Frost oder Schnee versehen sind, oder wenn die Treppenstufen mit Betriebsmitteln verunreinigt sind, ist durch die gitterartige Ausgestaltung dennoch in aller Regel ein ausreichender Halt zum Abschreiten bzw. Besteigen der Aufstiegstreppe durch den Bediener gegeben. Die gitterartig ausgebildeten Trittstufen können zusätzlich zumindest bereichsweise an einer mit den Schuhen des Bedieners in Kontakt kommenden Oberfläche eine Strukturierung, beispielsweise in Form einer Verzahnung, aufweisen, um die "Griffigkeit" weiter zu erhöhen.

Weiterhin sorgt die gitterartige Ausgestaltung der Trittstufen dafür, dass von dem bzw. den Schuhen des Bedieners sich während des Besteigens der Aufstiegstreppe lösende Verunreinigungen, während des Erntebetriebs entstehende Verunreinigungen und/oder Flüssigkeiten, denen die landwirtschaftliche Erntemaschine ausgesetzt ist, auf die erste Plateaufläche des Stufenplateaus gelangen können, um dort in Richtung des Bodens bzw. der Bodenfläche abgeleitet zu werden.

Gemäß einer vorteilhaften Weiterbildung der Erfindung ist vorgesehen, dass die Treppenstufen des zweiten, oberen, Treppenabschnitts derart übereinander angeordnet sind, dass der zweite, obere, Treppenabschnitt eine geradläufige Treppe ausbildet.

Gemäß einer vorteilhaften Weiterbildung der Erfindung ist vorgesehen, dass der Aufstieg eine Empore umfasst, die an die Fahrerkabine und die Aufstiegstreppe, insbesondere den zweiten, oberen, Treppenabschnitt, angrenzt.

Insbesondere ist vorgesehen, dass die Empore an die Fahrerkabine und den zweiten, oberen, Treppenabschnitt, angrenzt.

Die Ausgestaltung des zweiten, oberen, Treppenabschnitts in Gestalt einer geradläufigen Treppe und die Nutzung einer Empore sorgt dafür, dass die noch verbleibende Distanz zur Fahrerkabinenhöhe in Maschinenvertikal- bzw. Maschinenhöhenrichtung von einem Bediener der landwirtschaftlichen Erntemaschine abgeschritten werden kann und eine gute Zugänglichkeit zur Fahrerkabine gewährleistet ist, obwohl eine Anordnung des Bodeneingriffsmittels der Vorderachse an der landwirtschaftlichen Erntemaschine im Wesentlichen mit einer Position der Fahrerkabine in Maschinenlängsrichtung fluchtet und somit an und für sich ein gewissen Hindernis für die Zugänglichkeit der Fahrerkabine darstellt.

Gemäß einer vorteilhaften Weiterbildung der Erfindung ist vorgesehen, dass das Tankbehältnis der Aufnahme von Kraftstoff, Harnstofflösung, Siliermittel und/oder Kühlflüssigkeit dient.

Gemäß einer vorteilhaften Weiterbildung der Erfindung ist vorgesehen, dass das Tankbehältnis zumindest bereichsweise einen Kotflügel der landwirtschaftlichen Erntemaschine ausbildet.

Indem das Tankbehältnis zumindest bereichsweise einen Kotflügel der landwirtschaftlichen Erntemaschine ausbildet, also zumindest bereichsweise eine weitere strukturelle Komponente der landwirtschaftlichen Erntemaschine bereitstellt, wird der Nutzungsumfang und Funktionsumfang des Tankbehältnisses erweitert.

Die vorliegende Erfindung wird nachstehend anhand der in den Figuren abgebildeten Ausführungsformen näher beschrieben.

Es zeigen:
- FIG. 1: eine schematische und exemplarische Darstellung einer erfindungsgemäßen landwirtschaftlichen Erntemaschine in Gestalt eines Feldhäckslers;
- FIG. 2: eine schematische und exemplarische Darstellung eines erfindungsgemäßen Aufstiegs der erfindungsgemäßen landwirtschaftlichen Erntemaschine; und
- FIG. 3: eine schematische und exemplarische Darstellung einer erfindungsgemäßen Aufstiegstreppe des erfindungsgemäßen Aufstiegs aus FIG. 2.

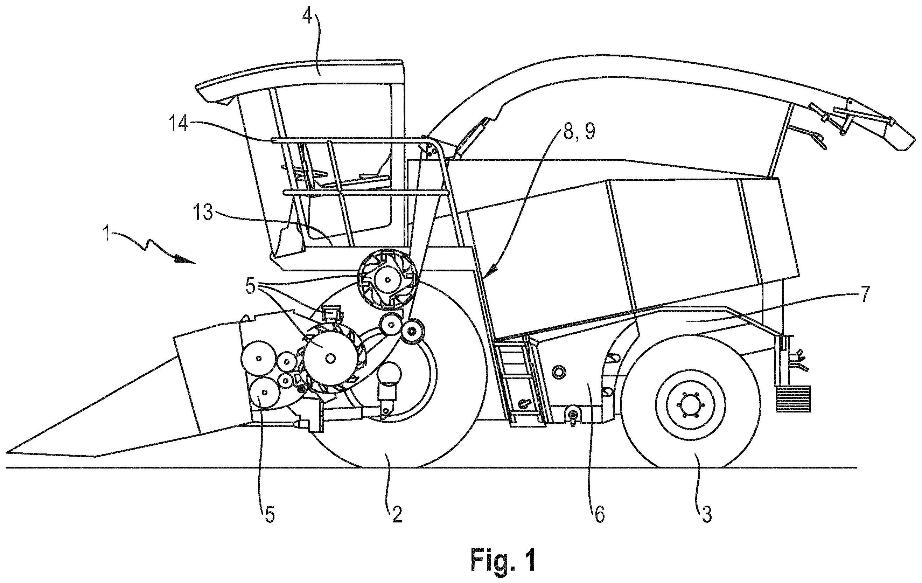

FIG. 1 zeigt eine schematische und exemplarische Seitenansicht einer landwirtschaftlichen, insbesondere selbstfahrenden, Erntemaschine 1 in Gestalt eines Feldhäckslers. Die landwirtschaftliche Erntemaschine 1 ist zur Fahrt auf landwirtschaftlichen Flächen und Straßen mit drehbar angetriebenen und lenkbaren Bodeneingriffsmitteln 2, 3 ausgestattet, die einer Vorderachse und einer Hinterachse der landwirtschaftlichen Erntemaschine 1 zugeordnet sind, wobei Antriebs- und Lenkfunktionen auf die Achsen verteilt oder an allen Achsen vorgesehen sein kann. Eine Fahrerkabine 4, die für einen - in den FIGs. 1 bis 3 nicht dargestellten - Bediener der landwirtschaftlichen Erntemaschine 1 zum Steuern und Überwachen des Betriebs derselben vorgesehen ist, ist oberhalb von Arbeitsaggregaten 5 der landwirtschaftlichen Erntemaschine 1 angeordnet. Der Boden der Fahrerkabine 4 befindet sich in einer gewissen Distanz bzw. Höhe, insbesondere etwa 2m, über dem Boden bzw. der Bodenfläche, so dass dem sich in der Fahrerkabine 4 befindenden Bediener während des Betriebs der landwirtschaftlichen Erntemaschine 1 eine gute Übersicht über vor der landwirtschaftlichen Erntemaschine 1 stehenden Pflanzenbestand auf einer landwirtschaftlichen Fläche oder im Straßenverkehr gewährt wird. Die landwirtschaftliche Erntemaschine 1 ist mit für sich bekannten - und daher nicht näher beschriebenen - Arbeitsaggregaten 5 (Einzugs- und Vorpresseinrichtung, Häckselaggregat, Nachzerkleinerungseinrichtung, Nachbeschleuniger) ausgestattet. Bei der Fahrt über eine landwirtschaftliche Fläche schneidet ein Erntevorsatzgerät auf der landwirtschaftlichen Fläche stehenden Pflanzenbestand ab und führt diesen den Arbeitsaggregaten 5 zu. In den Arbeitsaggregaten 5 wird das Erntegut weiterverarbeitet, insbesondere gehäckselt und nachzerkleinert, um anschließend beschleunigt durch eine Überladeeinrichtung zur Überladung in einen - in den FIGs. 1 bis 3 nicht dargestellten - mitfahrenden von einer Zugmaschine geschleppten Ladewagen geworfen zu werden.

Weiterhin umfasst die landwirtschaftliche Erntemaschine 1 ein Tankbehältnis 6, welches der Aufnahme von für den Betrieb der landwirtschaftlichen Erntemaschine 1 erforderlichen Betriebsstoffen, insbesondere Kraftstoff, Harnstofflösung, Siliermittel und/oder Kühlflüssigkeit, dient. Das Tankbehältnis 6 erstreckt sich zwischen der Vorderachse und der Hinterachse der landwirtschaftlichen Erntemaschine 1, wobei das Tankbehältnis 6 bereichsweise zwischen einem Bodeneingriffsmittel 2 der Vorderachse und einem Bodeneingriffsmittel 3 der Hinterachse zumindest auf einer Seite der landwirtschaftlichen Erntemaschine 1 angeordnet ist. Das Tankbehältnis 6 ist in eine Karosserie 7 integriert bzw. an einem Chassis der landwirtschaftlichen Erntemaschine 1 befestigt und in einem unteren Bereich der landwirtschaftlichen Erntemaschine 1 angeordnet. Das Tankbehältnis 6 kann einen Teilbereich eines Bodeneingriffsmittels 2 der Vorderachse und/oder einen Teilbereich eines Bodeneingriffsmittels der Hinterachse überdecken und somit zumindest bereichsweise als Kotflügel fungieren.

Das Tankbehältnis 6 kann in mehrere Abschnitte unterteilt sein, wobei die unterschiedlichen Abschnitte miteinander verbunden oder separiert sein können. Insbesondere besteht bei dem Tankbehältnis 6 die Möglichkeit in einem Abschnitt einen ersten Betriebsstoff, beispielsweise ein Siliermittel, und in einem weiteren Abschnitt einen zweiten Betriebsstoff, beispielsweise eine Kühlflüssigkeit, mitzuführen.

Da bei landwirtschaftlichen Erntemaschinen 1, wie dem in FIG. 1 dargestellten Feldhäcksler, die Fahrerkabine 4 verhältnismäßig hoch, nämlich oberhalb der Bodeneingriffsmittel 2 der Vorderachse angeordnet ist, umfassen diese landwirtschaftlichen Erntemaschinen 1 einen Aufstieg 8, über welchen die Fahrerkabine 4 für den Bediener zugänglich ist.

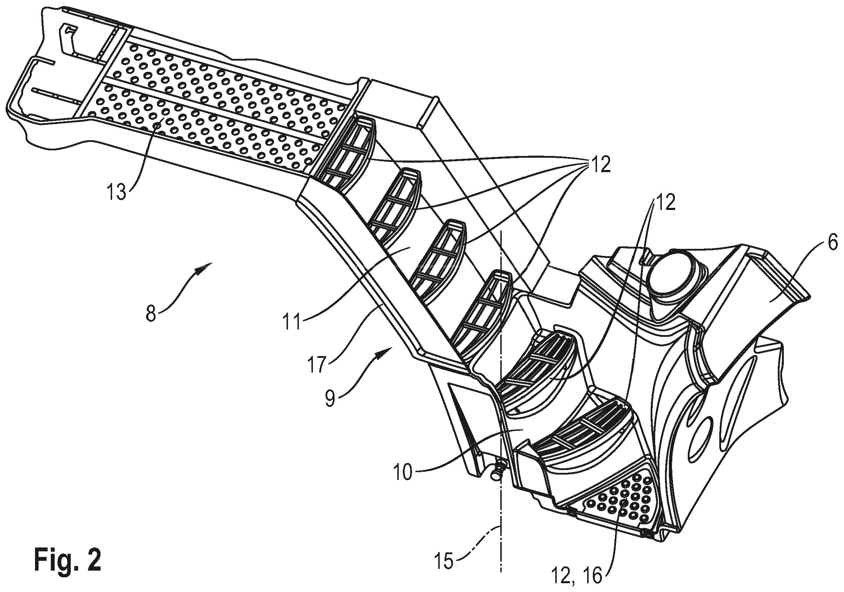

FIG. 2 zeigt einen erfindungsgemäßen Aufstieg 8 für die erfindungsgemäße landwirtschaftliche Erntemaschine 1, über den der Bediener von dem Boden bzw. der Bodenfläche aus die Fahrerkabine 4 besteigen kann. Der Aufstieg 8 führt den Bediener aus einer Position an der Seite der landwirtschaftlichen Erntemaschine 1 zwischen dem Bodeneingriffsmittel 2 der Vorderachse und dem Bodeneingriffsmittel 3 der Hinterachse zu einer Tür der Fahrerkabine 4 oberhalb des Bodeneingriffsmittels 2 der Vorderachse. Der Aufstieg 8 umfasst eine Aufstiegstreppe 9, die wiederum aus zwei Treppenabschnitten 10, 11 ausgebildet ist. Die Aufstiegstreppe 9 umfasst demnach einen ersten, unteren, Treppenabschnitt 10, also einen bodennahen Treppenabschnitt, und einen zweiten, oberen, Treppenabschnitt 11, also einen kabinennäheren Treppenabschnitt. Der zweite, obere, Treppenabschnitt 11 grenzt an den ersten, unteren, Treppenabschnitt 10 an, insbesondere ist der zweite, obere, Treppenabschnitt 11 mit dem ersten, unteren, Treppenabschnitt 10 verbunden. Beide Treppenabschnitte 10, 11 umfassen jeweils Treppenstufen 12. In der in FIG. 2 dargestellten Ausführungsform des Aufstiegs 8 umfasst der erste, untere, Treppenabschnitt 10 zwei Treppenstufen 12 und der zweite, obere, Treppenabschnitt 11 vier Treppenstufen 12. Eine andere Anzahl an Treppenstufen 12 für jeden Treppenabschnitt 10, 11 ist allerdings ebenfalls möglich.

Neben der Aufstiegstreppe 9 kann der Aufstieg 8 weiterhin eine Empore bzw. Plattform 13 umfassen, die an die Aufstiegstreppe 9, insbesondere den zweiten, oberen, Treppenabschnitt 11, angrenzt. Vorzugsweise ist die Empore 13 mit dem zweiten, oberen, Treppenabschnitt 11 verbunden. Der Aufstieg 8 kann weiterhin ein - in FIG. 1 gezeigtes - Geländer 14 umfassen, das an dem zweiten, oberen, Treppenabschnitt 11 und/oder der Empore 13 befestigt ist.

Wesentlich ist nun, dass das Tankbehältnis 6 den ersten, unteren, Treppenabschnitt 10 ausbildet und die Treppenstufen 12 des ersten, unteren, Treppenabschnitts 10 schraubenlinienartig entlang einer vertikal, also in Maschinenvertikal- bzw. Maschinenhöhenrichtung, verlaufenden Achse 15 angeordnet sind. Somit kann der für das Tankbehältnis 6 vorgesehene Bauraum an der landwirtschaftlichen Erntemaschine 1 gleichzeitig für den ersten, unteren, Treppenabschnitt genutzt werden, wobei durch die platzsparende schraubenlinienartige Anordnung der Treppenstufen 12 nur wenig vom Volumen des Tankbehältnisses 6 verloren geht.

Der erste, untere, Treppenabschnitt 10 wird vorzugsweise von dem Bereich des Tankbehältnisses 6 ausgebildet, der zwischen dem Bodeneingriffsmittel 2 der Vorderachse und dem Bodeneingriffsmittel 3 der Hinterachse angeordnet ist, so dass auch der erste, untere, Treppenabschnitt 10 zwischen dem Bodeneingriffsmittel 2 der Vorderachse und dem Bodeneingriffsmittel 3 der Hinterachse angeordnet ist.

Eine Ausrichtung einer ersten, untersten, Treppenstufe 12, also einer bodennächsten Treppenstufe, des ersten, unteren, Treppenabschnitts 10 ist von einer Ausrichtung einer letzten, obersten, Treppenstufe 12, also einer dem zweiten, oberen, Treppenabschnitt 11 nächsten Treppenstufe, des ersten, unteren, Treppenabschnitts 10 um einen Winkel zwischen 45° und 90° verschieden. Vorzugsweise ist die Ausrichtung der ersten, untersten, Treppenstufe 12 des ersten, unteren, Treppenabschnitts 10 ist von einer Ausrichtung der letzten, obersten, Treppenstufe 12 des ersten, unteren, Treppenabschnitts 10 um einen Winkel zwischen 60° und 90° verschieden. Bei einem Abschreiten bzw. Besteigen des ersten, unteren, Treppenabschnitts 10 ändert der Bediener somit seine Ausrichtung, so dass die Treppenstufen 12, insbesondere eine erste, unterste, Treppenstufe 12, also eine dem ersten, unteren, Treppenabschnitt 11 nächste Treppenstufe, des zweiten, oberen, Treppenabschnitts 11 einfach zugänglich sind.

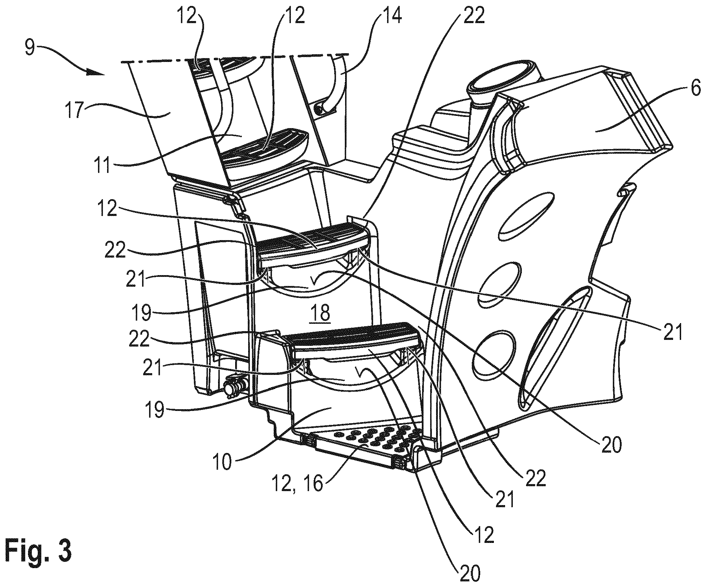

Ein Zugang vom Boden bzw. der Bodenfläche zum ersten, unteren, Treppenabschnitt 10, also die erste, unterste, Treppenstufe 12 des ersten, unteren, Treppenabschnitts 10 wird in der in den FIG. 2 und 3 dargestellten Ausführungsform durch ein unteres Trittblech 16 ausgebildet, das an dem Tankbehältnis 6 befestigt ist. Ebenso ist es allerdings möglich, dass der Zugang vom Boden bzw. der Bodenfläche zum ersten, unteren, Treppenabschnitt 10 durch eine gitterartige Trittstufe, die nachfolgend noch beschrieben wird, ausgebildet wird.

Der zweite, obere, Treppenabschnitt 11 wird durch einen Aufstiegsrahmen 17 gebildet, an dem die Treppenstufen 12 befestigt sind und der sich über eine Lauffläche des Bodeneingriffsmittels 2 der Vorderachse hin nach oberhalb des Bodeneingriffsmittels 2 zur Fahrerkabine 4, insbesondere zur Empore 13, erstreckt. Die Treppenstufen 12 des zweiten, oberen, Treppenabschnitts 11 sind derart übereinander angeordnet, dass der zweite, obere, Treppenabschnitt 11 eine geradläufige Treppe ausbildet.

Das Tankbehältnis 6 der landwirtschaftlichen Erntemaschine 1 umfasst einen gestuften Oberflächenbereich 18. Dieser gestufte Oberflächenbereich 18 bildet den ersten, unteren, Treppenabschnitt 10 aus und definiert den Verlauf des ersten, unteren, Treppenabschnitts 10. Durch die gestufte Ausgestaltung des Oberflächenbereichs 18 werden Stufenplateaus 19 ausgebildet, die im Wesentlichen die Lage der Treppenstufen 12 des ersten, unteren, Treppenabschnitts 10 vorgeben bzw. definieren. Einer jeden Treppenstufe 12 des ersten, unteren, Treppenabschnitts 10 ist ein durch den gestuften Oberflächenbereich 18 ausgebildetes Stufenplateau 19 am Tankbehältnis 6 zugeordnet. Die Stufenplateaus 19 sind dabei genauso wie die Treppenstufen 12 selbst schraubenlinienartig entlang der vertikal verlaufenden Achse 15 ausgerichtet. Jeder Treppenstufe 12 des ersten, unteren, Treppenabschnitts 10 ist ein Stufenplateau 19 zugeordnet, wobei die jeweilige Treppenstufe 12 oberhalb des Stufenplateaus 19 angeordnet und an dem Tankbehältnis 6 befestigt ist. Die Treppenstufen 12 des ersten, unteren, Treppenabschnitts 10 sind vorzugsweise als gitterartige Trittstufen ausgebildet. Entsprechend können auch die Treppenstufen 12 des zweiten, oberen, Treppenabschnitts 11 als gitterartige Trittstufen ausgebildet sein. Eine bei dem Abschreiten bzw. Besteigen der Treppenstufen 12 durch den Bediener der landwirtschaftlichen Erntemaschine 1 mit den Schuhen in Kontakt gelangende Oberfläche der gitterartig ausgebildeten Trittstufen kann optional mit einer Struktur versehen bzw. strukturiert sein, die eine "Griffigkeit" der Trittstufen erhöht und die Gefahr eines Abrutschens reduziert.

Jedes Stufenplateau 19 des gestuften Oberflächenbereichs 18 des Tankbehältnisses 6 umfasst eine erste Plateaufläche 20. Diese ist vorzugsweise mittig unterhalb einer Treppenstufe 12 angeordnet. Die erste Plateaufläche 20 ist derart geformt, dass Verunreinigungen, die auf die erste Plateaufläche 20 fallen bzw. dorthin gelangen, von der ersten Plateaufläche 20 abgeführt werden bzw. von dieser abgleiten. Solche Verunreinigungen können beispielsweise Verunreinigungen sein, die sich an einem Schuh des Bedieners befinden und sich bei dem Abschreiten bzw. Besteigen der Aufstiegstreppe 9 lösen, und/oder Verunreinigungen, die während des Erntebetriebs auf der landwirtschaftlichen Fläche entstehen. Diese Aufzählung ist nicht als abschließend zu verstehen.

Eine bevorzugte Ausgestaltung eines Stufenplateaus 19, die der in den FIGs. 2 und 3 dargestellten Ausführungsform zu entnehmen ist, sieht vor, dass die erste Plateaufläche 20 konkav ausgebildet ist und ein Gefälle entgegen der Aufstiegsrichtung aufweist. Durch die Konkavität der ersten Plateaufläche 20 werden Verunreinigungen, die neben und/oder durch die Treppenstufen 12 auf die erste Plateaufläche 20 fallen bzw. dorthin befördert werden, auf der ersten Plateaufläche 20 in einem Mittebereich zentriert. Durch das Gefälle werden diese dann von der ersten Plateaufläche 20 abgeführt bzw. können von der ersten Plateaufläche 20 abgleiten und auf eine nachfolgende erste Plateaufläche 20 eines weiteren Stufenplateaus 19 oder den Boden bzw. die Bodenfläche fallen bzw. befördert werden.

Neben der ersten Plateaufläche 20 umfasst jedes Stufenplateau 19 zumindest eine zweite Plateaufläche 21, die der Befestigung einer Treppenstufe 12 dient. Die zweite Plateaufläche 21 ist mit zumindest einer, vorzugsweise mehreren, ein Gewinde umfassenden Ausnehmung versehen, die einer Befestigung der Treppenstufe 12 mittels eines Befestigungsmittels, insbesondere einer Schraube, dient. Vorzugsweise ist die zweite Plateaufläche 21 in Maschinenvertikal- bzw. Maschinenhöhenrichtung höherliegend ausgebildet als die erste Plateaufläche 20, so dass die Treppenstufe 12 in Maschinenvertikal- bzw. Maschinenhöhenrichtung beabstandet von der ersten Plateaufläche 20 angeordnet ist. Eine bevorzugte Ausgestaltung des Stufenplateaus 19, die der Ausführungsform gemäß den FIGs. 2 und 3 zu entnehmen ist, sieht vor, dass das Stufenplateau 19 zwei zweite Plateauflächen 21 umfasst. Die zwei zweiten Plateauflächen 21 sind einander durch die erste Plateaufläche 20 beabstandet gegenüberliegend angeordnet. Eine Treppenstufe 12 kann dabei mit jeweils einem Ende an jeweils einer zweiten Plateaufläche 21 befestigt werden, so dass die Treppenstufe 12 die erste Plateaufläche 20 überbrückt.

Vorzugsweise ist das Tankbehältnis 6 der landwirtschaftlichen Erntemaschine 1 als Kunststoffrotationsgussbauteil ausgebildet bzw. ist ein solches Kunststoffrotationsgussbauteil. Hierbei kann die mit einem Gewinde versehenen Ausnehmung mittels eines Gewindeeinsatzes ausgebildet werden, die in das Tankbehältnis 6 eingegossen wird bzw. ist.

Jedes Stufenplateau 19 des Tankbehältnisses 6 ist weiterhin seitlich in Bezug auf die Aufstiegsrichtung durch Wandungen 22 begrenzt. Die Wandungen 22 werden durch das Tankbehältnis 6 selbst ausgebildet und grenzen jeweils an die zweiten Plateauflächen 21 an, wodurch die Treppenstufe 12 jeweils an beiden Enden von einer Wandung 22 eingerahmt wird.

Der erfindungsgemäße Aufstieg 8 kann an einer Seite der landwirtschaftlichen Erntemaschine 1 ausgebildet bzw. angeordnet sein oder aber an beiden Seiten der landwirtschaftlichen Erntemaschine 1. Ist der erfindungsgemäße Aufstieg 8 an nur einer Seite, vorzugsweise einer in linken Seite, der landwirtschaftlichen Erntemaschine 1 ausgebildet bzw. angeordnet, so ist in der Regel an der anderen Seite dennoch ein Aufstieg ausgebildet, der jedoch anders ausgestaltet ist als der zuvor beschriebene erfindungsgemäße Aufstieg 8.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

- 1: Landwirtschaftliche Erntemaschine
- 2: Bodeneingriffsmittel Vorderachse
- 3: Bodeneingriffsmittel Hinterachse
- 4: Fahrerkabine
- 5: Arbeitsaggregat
- 6: Tankbehältnis
- 7: Karosserie
- 8: Aufstieg
- 9: Aufstiegstreppe
- 10 11: erster, unterer, Treppenabschnitt zweiter, oberer, Treppenabschnitt
- 12: Treppenstufe
- 13: Empore bzw. Plattform
- 14: Geländer
- 15: Achse
- 16: unteres Trittblech
- 17: Aufstiegsrahmen
- 18: gestufter Oberflächenbereich
- 19: Stufenplateau
- 20: erste Plateaufläche
- 21: zweite Plateaufläche
- 22: Wandung

## Patentansprüche

1. Landwirtschaftliche Erntemaschine (1), insbesondere Feldhäcksler, mit einem Tankbehältnis (6) und einer Fahrerkabine (4), die über einen Aufstieg (8) zugänglich ist, wobei der Aufstieg (8) zumindest eine Aufstiegstreppe (9) umfasst, die einen ersten, unteren, Treppenabschnitt (10) und einen zweiten, oberen, Treppenabschnitt (11), der an den ersten, unteren, Treppenabschnitt (10) angrenzt, umfasst, wobei der erste, untere, Treppenabschnitt (10) und der zweite, obere, Treppenabschnitt (11) jeweils Treppenstufen (12) umfassen, wobei das Tankbehältnis (6) bereichsweise zwischen einem Bodeneingriffsmittel (2) einer Vorderachse und einem Bodeneingriffsmittel (3) einer Hinterachse der landwirtschaftlichen Erntemaschine (1) angeordnet ist, wobei das Tankbehältnis (6) den ersten, unteren, Treppenabschnitt (10) ausbildet, wobei die Treppenstufen (12) des ersten, unteren, Treppenabschnitts (10) schraubenlinienartig entlang einer vertikal verlaufenden Achse (15) angeordnet sind, wobei das Tankbehältnis (6) einen gestuften Oberflächenbereich (18) umfasst, der den ersten, unteren, Treppenabschnitt (10) ausbildet, wobei jeder Treppenstufe (12) des ersten, unteren, Treppenabschnitts (10) ein durch den gestuften Oberflächenbereich (18) des Tankbehältnisses (6) ausgebildetes Stufenplateau (19) zugeordnet ist,
**dadurch gekennzeichnet, dass**
jedes Stufenplateau (19) eine erste Plateaufläche (20) umfasst, die derart geformt ist, dass Verunreinigungen, die auf die erste Plateaufläche (20) fallen, von der ersten Plateaufläche (20) abgeführt werden.

2. Landwirtschaftliche Erntemaschine (1) nach Anspruch 1, **dadurch gekennzeichnet, dass** eine Ausrichtung einer ersten, untersten, Treppenstufe (12) des ersten, unteren, Treppenabschnitts (10) von einer Ausrichtung einer letzten, obersten, Treppenstufe (12) des ersten, unteren, Treppenabschnitts (10) um einen Winkel zwischen 45° und 90°, vorzugsweise zwischen 60° und 90°, verschieden ist.

3. Landwirtschaftliche Erntemaschine (1) nach einem der Ansprüche 1 bis 2, **dadurch gekennzeichnet, dass** jeweils eine Treppenstufe (12) des ersten, unteren, Treppenabschnitts (10) oberhalb jeweils eines Stufenplateaus (19) angeordnet ist.

4. Landwirtschaftliche Erntemaschine (1) nach einem der Ansprüche 1 bis 3 , **dadurch gekennzeichnet, dass** die erste Plateaufläche (20) konkav und ein Gefälle entgegen einer Aufstiegsrichtung aufweisend ausgebildet ist.

5. Landwirtschaftliche Erntemaschine (1) nach einem der Ansprüche 1 bis 4, **dadurch gekennzeichnet, dass** jedes Stufenplateau (19) zumindest eine zweite Plateaufläche (21) umfasst, die einer Befestigung einer Treppenstufe (21) des ersten, unteren, Treppenabschnitts (10) an dem Tankbehältnis (6) dient.

6. Landwirtschaftliche Erntemaschine (1) nach Anspruch 5, **dadurch gekennzeichnet, dass** jedes Stufenplateau (19) zwei zweite Plateauflächen (21) umfasst, die einander durch die erste Plateaufläche (20) beabstandet gegenüberliegend angeordnet sind.

7. Landwirtschaftliche Erntemaschine (1) nach Anspruch 5 oder 6, **dadurch gekennzeichnet, dass** die zumindest eine zweite Plateaufläche (21) zumindest eine mit einem Gewinde versehene Ausnehmung umfasst, die der Befestigung der Treppenstufe (12) des ersten, unteren, Treppenabschnitts (10) mittels eines Befestigungsmittels an dem Tankbehältnis (6) dient.

8. Landwirtschaftliche Erntemaschine (1) nach einem der Ansprüche 1 bis 7, **dadurch gekennzeichnet, dass** jedes Stufenplateau (19) seitlich in Bezug auf eine Aufstiegsrichtung durch Wandungen (22) begrenzt ist, wobei die Wandungen (22) durch das Tankbehältnis (6) ausgebildet sind.

9. Landwirtschaftliche Erntemaschine (1) nach einem der Ansprüche 1 bis 8, **dadurch gekennzeichnet, dass** das Tankbehältnis (6) ein Kunststoffrotationsgussbauteil ist, wobei, vorzugsweise, die mit einem Gewinde versehene Ausnehmung der zumindest einen zweiten Plateaufläche (21) mittels eines Gewindeeinsatzes ausgebildet ist, der in das Tankbehältnis (6) eingegossen ist.

10. Landwirtschaftliche Erntemaschine (1) nach einem der Ansprüche 1 bis 9, **dadurch gekennzeichnet, dass** die Treppenstufen (12) des ersten, unteren, Treppenabschnitts (10) und/oder des zweiten, oberen, Treppenabschnitts (11) durch gitterartige Trittstufen ausgebildet sind.

11. Landwirtschaftliche Erntemaschine (1) nach einem der Ansprüche 1 bis 10, **dadurch gekennzeichnet, dass** die Treppenstufen (12) des zweiten, oberen, Treppenabschnitts (11) derart übereinander angeordnet sind, dass der zweite, obere, Treppenabschnitt (11) eine geradläufige Treppe ausbildet; und/oder
der Aufstieg (8) eine Empore (13) umfasst, die an die Fahrerkabine (4) und die Aufstiegstreppe (9), insbesondere den zweiten, oberen, Treppenabschnitt (11), angrenzt.

12. Landwirtschaftliche Erntemaschine (1) nach einem der Ansprüche 1 bis 11, **dadurch gekennzeichnet, dass** das Tankbehältnis (6) der Aufnahme von Kraftstoff, Harnstofflösung, Siliermittel und/oder Kühlflüssigkeit dient.

13. Landwirtschaftliche Erntemaschine (1) nach einem der Ansprüche 1 bis 12, **dadurch gekennzeichnet, dass** das Tankbehältnis (6) zumindest bereichsweise einen Kotflügel der landwirtschaftlichen Erntemaschine (1) ausbildet.

## Claims

1. An agricultural harvesting machine (1), in particular a forage harvester, with a tank container (6) and a driver's cab (4) which is accessible via a flight of stairs (8), wherein the flight of stairs (8) comprises at least one flight stairway (9) which comprises a first, lower, stairway section (10) and a second, upper, stairway section (11) which adjoins the first, lower, stairway section (10), wherein the first, lower, stairway section (10) and the second, upper, stairway section (11) respectively comprise stairway steps (12), wherein in regions, the tank container (6) is disposed between a ground engaging means (2) of a front axle and a ground engaging means (3) of a rear axle of the agricultural harvesting machine (1), wherein the tank container (6) forms the first, lower, stairway section (10), wherein the stairway steps (12) of the first, lower, stairway section (10) are helically disposed along a vertically extending axis (15), wherein the tank container (6) comprises a stepped surface region (18) which forms the first, lower, stairway section (10), wherein each stairway step (12) of the first, lower, stairway section (10) is associated with a step plateau (19) formed by the stepped surface region (18) of the tank container (6),
**characterized in that**
each step plateau (19) comprises a first plateau surface (20) which is shaped such that dirt which falls onto the first plateau surface (20) is dissipated away from the first plateau surface (20).

2. The agricultural harvesting machine (1) according to claim 1, **characterized in that** an orientation of a first, lowermost, stairway step (12) of the first, lower, stairway section (10) differs from an orientation of a last, uppermost, stairway step (12) of the first, lower, stairway section (10) by an angle between 45° and 90°, preferably between 60° and 90°.

3. The agricultural harvesting machine (1) according to one of claims 1 to 2, **characterized in that** a respective stairway step (12) of the first, lower, stairway section (10) is disposed above a respective step plateau (19).

4. The agricultural harvesting machine (1) according to one of claims 1 to 3, **characterized in that** the first plateau surface (20) is concave and is constructed with an inclination which is opposite to an ascending direction.

5. The agricultural harvesting machine (1) according to one of claims 1 to 4, **characterized in that** each step plateau (19) comprises at least one second plateau surface (21) which serves to fasten a stairway step (21) of the first, lower, stairway section (10) to the tank container (6).

6. The agricultural harvesting machine (1) according to claim 5, **characterized in that** each step plateau (19) comprises two second plateau surfaces (21) which are disposed opposite one another spaced apart by the first plateau surface (20).

7. The agricultural harvesting machine (1) according to claim 5 or claim 6, **characterized in that** the at least one second plateau surface (21) comprises at least one recess provided with a screw thread, the recess serving to fasten the stairway step (12) of the first, lower, stairway section (10) to the tank container (6) by means of a fastening means.

8. The agricultural harvesting machine (1) according to one of claims 1 to 7, **characterized in that,** with respect to an ascending direction, each step plateau (19) is laterally delimited by walls (22), wherein the walls (22) are formed by the tank container (6).

9. The agricultural harvesting machine (1) according to one of claims 1 to 8, **characterized in that** the tank container (6) is a rotationally moulded plastic component, wherein preferably, the recess provided with a screw thread of the at least one second plateau surface (21) is formed by means of a threaded insert which is moulded into the tank container (6).

10. The agricultural harvesting machine (1) according to one of claims 1 to 9, **characterized in that** the stairway steps (12) of the first, lower, stairway section (10) and/or of the second, upper, stairway section (11) are formed by grid-like treads.

11. The agricultural harvesting machine (1) according to one of claims 1 to 10, **characterized in that** the stairway steps (12) of the second, upper, stairway section (11) are disposed one above the other in a manner such that the second, upper, stairway section (11) forms a straight stairway; and/or the flight of stairs (8) comprises a gallery (13) which adjoins the driver's cab (4) and the flight stairway (9), in particular the second, upper, stairway section (11).

12. The agricultural harvesting machine (1) according to one of claims 1 to 11, **characterized in that** the tank container (6) serves to accommodate fuel, urea solution, silage additive and/or coolant.

13. The agricultural harvesting machine (1) according to one of claims 1 to 12, **characterized in that,** at least in regions, the tank container (6) forms a fender of the agricultural harvesting machine (1).

## Revendications

1. Récolteuse agricole (1), notamment ramasseuse-hacheuse, comprenant un récipient formant réservoir (6) et une cabine de conduite (4) qui est accessible via un moyen de montée (8), ledit moyen de montée (8) comportant au moins un escalier de montée (9) qui comprend une première partie d'escalier inférieure (10) et une deuxième partie d'escalier supérieure (11) qui est adjacente à la première partie d'escalier inférieure (10), la première partie d'escalier inférieure (10) et la deuxième partie d'escalier supérieure (11) comportant chacune des marches d'escalier (12), le réservoir (6) étant disposé par portions entre un moyen de prise au sol (2) d'un essieu avant et un moyen de prise au sol (3) d'un essieu arrière de la récolteuse agricole (1), le réservoir (6) formant la première partie d'escalier inférieure 10), les marches d'escalier (12) de la première partie d'escalier inférieure (10) étant disposées sous une forme hélicoïdale le long d'un axe (15) vertical, le réservoir (6) comprenant une zone de surface (18) étagée qui forme la première partie d'escalier inférieure (10), un plateau de marche (19) constitué de la zone de surface (18) étagée du réservoir (6) étant associé à chaque marche d'escalier (12) de la première partie d'escalier inférieure (10),
**caractérisée en ce que**
chaque plateau de marche (19) comprend une première surface de plateau (20) qui est formée de manière à ce que des salissures tombant sur la première surface de plateau (20) soient évacuées par la première surface de plateau (20).

2. Récolteuse agricole (1) selon la revendication 1, **caractérisée en ce qu'**une orientation d'une première marche d'escalier (12) inférieure de la première partie d'escalier inférieure (10) est différente d'une orientation d'une dernière marche d'escalier (12) supérieure de la première partie d'escalier inférieure (10), d'un angle qui est compris entre 45° et 90°, de préférence entre 60° et 90°.

3. Récolteuse agricole (1) selon une des revendications 1 à 2, **caractérisée en ce que** chaque fois une marche d'escalier (12) de la première partie d'escalier inférieure (10) est disposée respectivement au-dessus d'un plateau de marche (19).

4. Récolteuse agricole (1) selon une des revendications 1 à 3, **caractérisée en ce que** la première surface de plateau (20) est réalisée sous une forme concave et présente une pente qui est opposée à un sens de montée.

5. Récolteuse agricole (1) selon une des revendications 1 à 4, **caractérisée en ce que** chaque plateau de marche (19) comprend au moins une deuxième surface de plateau (21) qui sert à fixer une marche d'escalier (21) de la première partie d'escalier inférieure (10) au réservoir (6).

6. Récolteuse agricole (1) selon la revendication 5, **caractérisée en ce que** chaque plateau de marche (19) comprend deux deuxièmes surfaces de plateau (21) qui sont disposées en vis-à-vis l'une de l'autre, en étant espacées par la première surface de plateau (20).

7. Récolteuse agricole (1) selon la revendication 5 ou 6, **caractérisée en ce que** la deuxième surface de plateau (21), au nombre d'au moins une, comprend au moins un évidement doté d'un filetage qui sert à la fixation de la marche d'escalier (12) de la première partie d'escalier inférieure (10) au réservoir (6), à l'aide d'un moyen de fixation.

8. Récolteuse agricole (1) selon une des revendications 1 à 7, **caractérisée en ce que** chaque plateau de marche (19) est délimité par des parois (22), latéralement par rapport à un sens de montée, les parois (22) étant formées par le réservoir (6).

9. Récolteuse agricole (1) selon une des revendications 1 à 8, **caractérisée en ce que** le réservoir (6) est un élément en matière plastique moulée par rotation, dans lequel l'évidement doté d'un filetage de la deuxième surface de plateau (21), au nombre d'au moins une, est de préférence réalisé à l'aide d'un insert fileté qui est moulé dans le réservoir (6).

10. Récolteuse agricole (1) selon une des revendications 1 à 9, **caractérisée en ce que** les marches d'escalier (12) de la première partie d'escalier inférieure (10) et/ou de la deuxième partie d'escalier supérieure (11) sont constituées de marches en forme de grilles.

11. Récolteuse agricole (1) selon une des revendications 1 à 10, **caractérisée en ce que** les marches d'escalier (12) de la deuxième partie d'escalier supérieure (11) sont disposées les unes au-dessus des autres de manière à ce que la deuxième partie d'escalier supérieure (11) forme un escalier rectiligne, et/ou la montée (8) comprend une galerie (13) qui est adjacente à la cabine de conduite (4) et à l'escalier de montée (9), notamment à la deuxième partie d'escalier supérieure (11).

12. Récolteuse agricole (1) selon une des revendications 1 à 11, **caractérisée en ce que** le réservoir (6) sert à accueillir du carburant, une solution d'urée, un produit d'ensilage et/ou un liquide de refroidissement.

13. Récolteuse (1) agricole selon une des revendications 1 à 12, **caractérisée en ce que** le réservoir (6) constitue au moins par portions une aile de la récolteuse agricole (1).
